# EUROPEAN PATENT APPLICATION

(11) **EP 4 645 046 A1**
(43) Date of publication of application: **05.11.2025**
(21) Application number: 24305704.9
(22) Date of filing: 03.05.2024
(51) Int. Cl.: G06F 3/046, G06F 3/0354

(54) **USER BORNE DEVICE WITH FLEXIBLE TIP HAVING FERROMAGNETIC MATERIAL**

(71) Applicant: Advanced Magnetic Interaction, AMI, 38170 Seyssinet-Pariset (FR)
(72) Inventor: Hautson, Tristan, 38170 Seyssinet-Pariset (FR); Jobert, Timothée, 38170 Seyssinet-Pariset (FR); Chavin-Collin, Gireg, 38170 Seyssinet-Pariset (FR)
(74) Representative: Peterreins Schley

(57) **Abstract**

The present disclosure relates to a user borne device (100) for use with an electronic interactive display (200). The electronic interactive display (200) comprises a magnetically actuatable material (19A, 19B) and a plurality of magnetometers (230). The user borne device (100) comprises an elongate body (110), a magnetic object (120), and a flexible tip (130). The elongate body (110) defines a longitudinal axis (L) of the user borne device (100). The elongate body (110) comprises a proximal end (112) and a distal end (114). The magnetic object (120) is arranged between the proximal end (112) and the distal end (114). The magnetic object (120) is configured to create a magnetic field (123). The flexible tip (130) is arranged at the proximal end (112) and extends away from the proximal end (112) outside the elongate body (110). The flexible tip (130) comprises ferromagnetic material.

## Description

### TECHNICAL FIELD

The present disclosure relates to the technical field of determining and/or tracking a location of passive accessories, specifically to a user borne device for use with an electronic interactive display which comprises a magnetically actuatable material and a plurality of magnetometers. Furthermore, the present disclosure relates to a system comprising such a user-borne device and electronic interactive display.

### BACKGROUND

In the technical field of location determination and/or tracking of a device held or worn by user (i.e., a user-borne device), the provision of a plurality of magnetometers allows to measure a magnetic field associated with a magnetic object arranged in or coupled to the user-borne device. The user-borne devices using this technology may be electronically and/or electrically passive. More specifically, electrically passive means that the user-borne device may not comprise a power source (e.g., batteries) and/or means to receive power (e.g., wireless power transmission via an inductive coil) for powering an electronic feature of the user-borne device. Electronically passive means that no computation or processing occurs (or happens) on the user-borne device. The magnetometer measurements enable determining and/or tracking of the location of the magnetic object within a sensing volume created by the plurality of magnetometers. The location may include a position and/or orientation of the magnetic object. In some applications, the magnetic object may be arranged within a writing device (e.g., a stylus) which may be operated by a user on an interaction surface (e.g. a writing support) during a user operation. Based on the magnetic field measurements associated with the magnetic object, a location of the writing device on the writing support may be determined.

A user-operation of the user-borne device within a sensing volume created by the plurality of magnetometers may be represented on an output device (e.g., a screen) to a user. More specifically, a movement of the user-borne device on the interaction surface within the sensing volume may be digitally reproduced as a movement of a virtual object and/or as a track of movement on the output device. In some applications, a physical reproduction of a track (e.g. a physical trace) of movement of a user-borne device, e.g. on magneto-responsive electrophoretic displays (mEPD), is also desired. However, current approaches are faced with challenges with regards to accuracy and reliability of physical traces without saturating the mEPD and at the same time providing a user borne device having sufficient magnetic strength to be detected by the plurality of magnetometers (i.e., to be digitally traced).

The object of the present disclosure is to provide a user borne device which enables improved digital and physical tracking.

### SUMMARY

The present disclosure relates to a user borne device as defined in claim 1, and a system comprising such a user-borne device as defined in claim 10. The dependent claims depict embodiments of the present disclosure.

According to a first aspect of the present disclosure, a user borne device for use with an electronic interactive display is disclosed. The electronic interactive display comprises a magnetically actuatable material and a plurality of magnetometers. The user borne device comprises an elongate body, a magnetic object, and a flexible tip. The elongate body defines a longitudinal axis of the user borne device. The elongate body comprises a proximal end and a distal end. The magnetic object is arranged between the proximal end and the distal end. The magnetic object is configured to create a magnetic field. The flexible tip is arranged at the proximal end and extends away from the proximal end outside the elongate body . The flexible tip comprises ferromagnetic material.

The user borne device according to the first aspect provides for a more versatile tracing technology including brush or calligraphy effects whereby the user borne device enables it to be traced to be both digitally and physically. By having a flexible tip including ferromagnetic material, the magnetic field created by the magnetic object can be focused along the ferromagnetic material. In other words, a magnetic signature of the user borne device may be defined by the magnetic object and the flexible tip. Alternatively described, the user borne device is configured to define a magnetic signature. This magnetic signature can be detected by the magnetometers. Furthermore, the magnetic signature can directly alter a state of the magnetically actuatable material of the interactive electronic display. As the tip is flexible it can change its form and/or relative position to the magnetic object. This may result in a change of the magnetic signature which is detectable by magnetometers. Furthermore, the changed magnetic signature results in a different extent of change (e.g., a larger or smaller area is changed and/or a more intense or less intense change may be achieved) of the magnetically actuatable material. Hence, with the user borne device both a digital tracing (via magnetometers) and a physical tracing (via magnetically actuatable material) of the user borne device is possible. In addition, as the tip is flexible it may imitate the feeling of a brush compared to a stiff tip when a user applies a pressure when guiding the user borne device on a surface. Also the flexible tip may enable the user borne device to have a constantly variable magnetic field depending on the pressure applied by the user. Particularly, due to the ferromagnetic material in the flexible tip, a brush or calligraphy effect can be achieved with the user borne device when used with a system according to the second aspect, which is directly physically and digitally traceable.

According to a second aspect of the present disclosure, a system is disclosed. The system comprises an electronic interactive display and the user borne device of the first aspect. The electronic interactive display comprises a magnetically actuatable display and a plurality of magnetometers. The electronic interactive display defines an interaction surface. The user borne device is operable on the interaction surface. The plurality of magnetometers is configured to create a sensing volume. The plurality of magnetometers is further configured to measure a magnetic signature created by the user borne device. A portion of the magnetically actuatable display is configurable from least a first visual state into a second visual state based on a magnetic stimulus of the magnetic signature. The above-described effects and advantages for the system and assembly may apply analogously to the system.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **Fig. 1**: is a schematic view of a system according to the second aspect of the present disclosure, and including a user borne device according to the first aspect and an electronic interactive display;
- **Figs. 2A**: is a schematic side view of a user borne device operated on an interaction surface;
- **Figs. 2B and 2C**: show a respective physical trace and digital trace of the user borne device according to the operation of Fig. 2A;
- **Figs. 3A**: is a schematic side view of a user borne device operated on an interaction surface with the flexible tip being deformed compared to Fig. 2A;
- **Figs. 3B and 3C**: show a respective physical trace and digital trace of the user borne device according to the operation of Fig. 3A;
- **Figs. 4A**: is a schematic side view of a user borne device operated on an interaction surface with the magnetic object being moved further away from the flexible tip compared to Fig. 2A;
- **Figs. 4B and 4C**: show a respective physical trace and digital trace of the user borne device according to the operation of Fig. 4A;
- **Fig. 5A**: schematically illustrates a magnetically actuatable display material;
- **Fig. 5B**: schematically illustrates a magnetically and electrically actuatable display material;
- **Fig. 5C**: schematically illustrates a magnetically and electrically actuatable display material comprising a position digitization means.

### DETAILED DESCRIPTION

Embodiments of the user-borne device and the system according to the present disclosure will be described in reference to the drawings as follows.

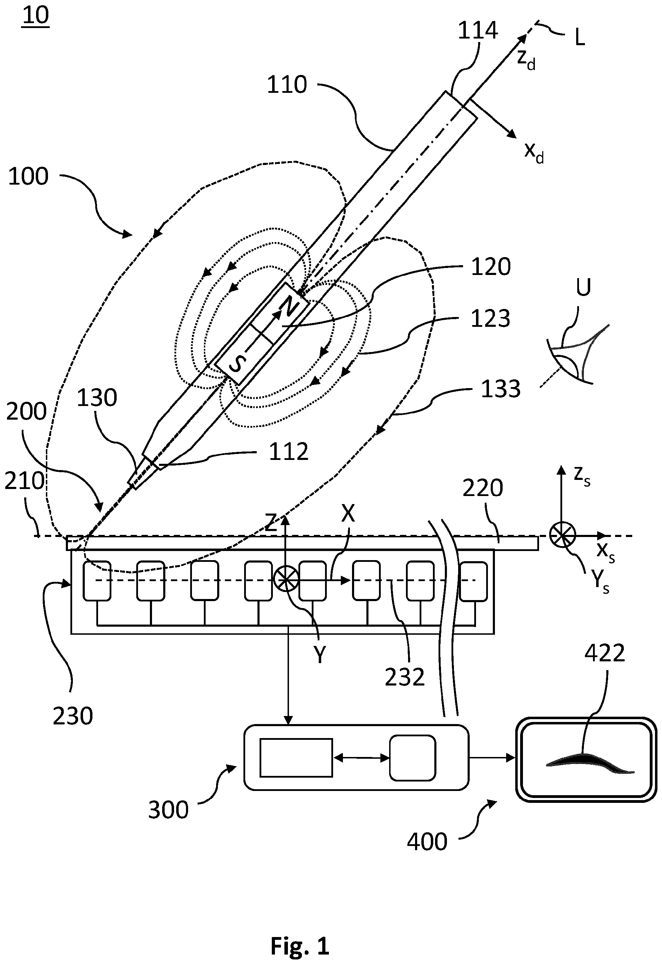

**Fig. 1** schematically illustrates the system 10 according to the second aspect of the present disclosure. The system 10 comprises an electronic interactive display 200 and the user borne device 100 according to the first aspect of the present disclosure. The electronic interactive display 200 comprises a magnetically actuatable display 220 and a plurality of magnetometers 230. The electronic interactive display 200 defines an interaction surface 210. The magnetically actuatable display 220 faces a user U.

The user borne device 100 comprises an elongate body 110, a magnetic object 120, and a flexible tip 130. The elongate body 110 defines a longitudinal axis L of the user borne device 100. The elongate body 110 comprises a proximal end 112 and a distal end 114. The magnetic object 120 is arranged between the proximal end 112 and the distal end 114. The magnetic object 120 is configured to create a magnetic field 123. The flexible tip 130 is arranged at the proximal end P and extends away from the proximal end 112 outside the elongate body 110.

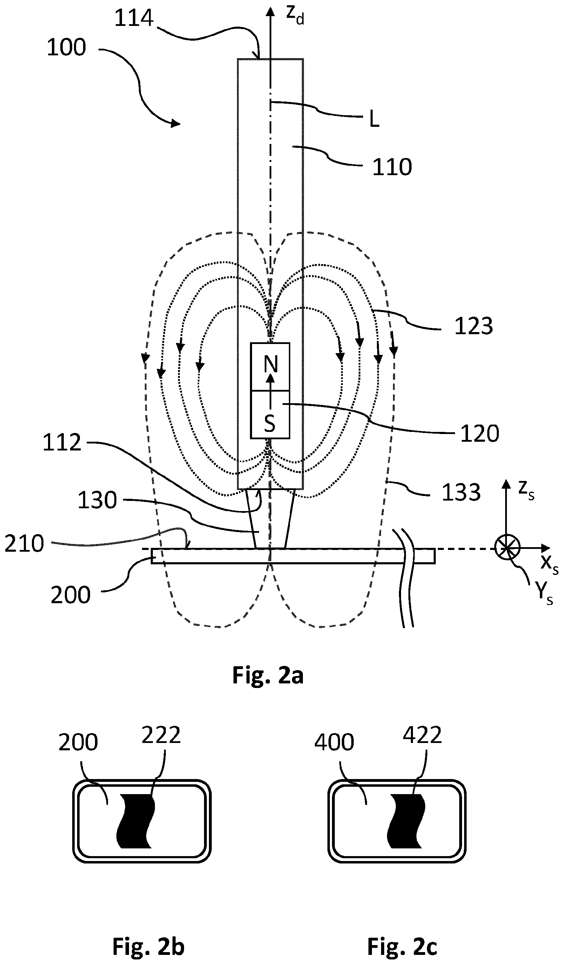

The flexible tip 130 comprises ferromagnetic material. A "ferromagnetic material" may be understood as a material exhibiting strong magnetism due to the parallel alignment of their spin's magnetic moments. They can retain their magnetization even after the external magnetic field is removed, which makes them suitable for permanent magnets and other applications requiring strong magnetic fields. Examples include iron, nickel, and cobalt. In examples, the flexible tip 130 may comprise at least one of one or more ferromagnetic wires (e.g. iron wire), ferromagnetic powder and/or plasto ferrite. A plasto ferrite may also be referred to as a magnetic rubber. In embodiments, wherein the flexible tip 130 comprises ferromagnetic wire, the ferromagnetic wire(s) may be arranged at least partially on edges of the flexible tip 130. For instance, with respect to **Fig. 2a****,** the ferromagnetic wire(s) may extend along the right, left and bottom edge of the flexible tip 130. In addition or alternatively, ferromagnetic wire may at least partially extend along and/or parallel to the longitudinal axis L in the flexible tip 130 (in an unflexed state of the flexible tip 130). One or more ferromagnetic wires may extend inclinedly with respect to the longitudinal axis L. In some embodiments, a non-deformable ferromagnetic element may be arranged in the flexible tip 130. For instance, the flexible tip 130 may extend farther away from the elongate body 110 (e.g. along the longitudinal direction L) than the non-deformable ferromagnetic element. Thereby, the flexible tip 130 may be deformed (e.g. when a force by a user U acts on the user borne device in a direction towards the interaction surface 210) such that a distance and/or angle of the non-deformable ferromagnetic element with respect to the interaction surface 210 may be adjusted. In examples, the flexible tip 130 may be configured as a silicone tip or a brush tip. In some examples, the ferromagnetic material may be incorporated in the material of the silicone tip or in the material of the brush tip.

With further reference to **Fig. 1****,** the user borne device 100 is operable on the interaction surface 210. The plurality of magnetometers 230 is configured to create a sensing volume. The plurality of magnetometers 230 may be associated with a magnetometer plane 232. More specifically, the magnetometer plane 232 may be defined by a plane that may extend through a majority of the plurality of magnetometers 230. The plurality of magnetometers 230 is further configured to measure a magnetic signature 123, 133 created by the user borne device 100. Alternatively described, a magnetic signature 123, 133 of the user borne device 100 is configured to be detectable by the plurality of magnetometers 230. Especially the magnetic signature 123, 133 of the magnetic object 120. In that regard, the system 10 may further comprise an output device 400 which is configured to visually reproduce the user borne device 100 as a virtual object. More specifically the system 10 is configured to reproduce a movement of the user borne device 100 (on the interaction surface 210) as a digital trace 422 on the output device 400 (see, also **Figs. 2c****,** **3c****,** **4c**). In examples, the output device 400 may comprise one or more of a display, a screen, a light, a domotic peripheral, a laptop, a smartphone, a tablet, or a control panel. A portion of the magnetically actuatable display 220 (which comprises magnetically actuatable material 19A, 19B) is configurable from least a first visual state into a second visual state based on a magnetic stimulus of the magnetic signature 123, 133. In other words and the magnetically actuatable display 220 may visualize a physical trace 222 of the user borne device 100 on the interaction surface 210 (see, also **Figs. 2b****,** **3b****,** **4b**). Particularly, the user borne device 100 may be operable on the interaction surface 210 with the flexible tip 130 pointing towards and/or contacting the interaction surface 210, for instance to perform a handwriting, drawing and/or for erasing.

The user borne device 100 (and also the system 10) provides for a more versatile tracing technology including brush or calligraphy effects (with regard to both drawing/writing and/or erasing), whereby the user borne device 100 enables it to be traced to be both digitally and physically with high accuracy. Generally, the user borne device 100 may be a writing, drawing and/or erasing instrument. In embodiments, writing, drawing and/or erasing instrument may include instruments which are configured to perform one or more of the functions: writing, drawing and erasing. By having a flexible tip 130 including ferromagnetic material, the magnetic field created by the magnetic object 120 can be focused along the ferromagnetic material. In other words, the above mentioned magnetic signature 123, 133 of the user borne device 100 may be defined by the magnetic object 120 and the flexible tip 130. Alternatively described, the user borne device 100 is configured to define the magnetic signature 123, 133. This magnetic signature 123, 133 can be detected by the magnetometers 230. Furthermore, the magnetic signature 123, 133 can directly alter a state of the magnetically actuatable material 19A, 19B of the interactive electronic display 200 (e.g. to create a physical trace 222 on the magnetically actuatable display 220). Alternatively described, the magnetic signature 123, 133 of the user borne device 100 is configured to change an appearance of the magnetically actuatable material 19A, 19B from a first state to a second state.

Again with reference to **Fig. 1****,** the system 10 may comprise or is connectable to a processing unit 300 which is configured to track a movement of the magnetic object 120 in at least five degrees of freedom. More specifically, the processing unit 300 may be configured to identify the characteristic represented by the magnetic signature 123, 133 of the user borne device 100. A movement of the magnetic object 120 may comprise a plurality of locations (position and orientation) of the magnetic object 120 over time. Specifically the system 10 can track a trace (and/or its characteristic) performed by the flexible tip 120 based on the measured magnetic signature/magnetic field. In detail, the plurality of magnetometers 230 perform magnetic field measurements of the user borne device 100 (specifically of the magnetic object 120) and provide magnetic field measurement data based on the magnetic field measurements to the processing unit 300. Based on the measurement data, the processing unit 300 determines a location of the user borne device 100, particularly a location of the flexible tip 130 and a characteristic.

The system 10 may define a reference coordinate system XYZ relative to the plurality of magnetometers 230 (see, e.g., **Fig. 1**). The reference coordinate system XYZ may comprise a first reference axis X, a second reference axis Y and a vertical reference axis Z. The first reference axis X and the second reference axis Y may be orthogonal to each other. The vertical reference axis Z may be orthogonal to the first reference axis X and the second reference axis Y. The vertical reference axis Z may extend through a center of the plurality of magnetometers 230. In embodiments, the first reference axis X and the second reference axis Y may be defined on the magnetometer plane 232. In this case, the vertical reference axis Z may be orthogonal to the magnetometer plane 232.

The system 10 may define an interaction surface coordinate system xₛyₛzₛ relative to the interaction surface 210 (see, e.g., Figs. 1, 2a, 3a, 4a, 5a, 5b, 5c). The interaction surface coordinate system xₛyₛzₛ may comprise a first interaction surface axis xₛ, a second interaction surface axis yₛ and a vertical interaction surface axis zₛ. The first interaction surface axis xₛ and the second interaction surface axis yₛ may be orthogonal to each other and may define the interaction surface 210. The vertical interaction surface axis zₛ may be orthogonal to the first interaction surface axis xₛ and second interaction surface axis yₛ. In other words, the vertical interaction surface axis zₛ may be orthogonal to the interaction surface 210. The location and/or the trace of the user borne device 100 may be determined with respect to the interaction surface coordinate system xₛyₛzₛ.

As the tip 130 is flexible it can change its form and/or relative position to the magnetic object 120. This may result in a change of the magnetic signature 123, 133 which is detectable by the plurality of magnetometers 230. Furthermore, the changed magnetic signature 123, 133 results in a different extent of change (e.g., a larger or smaller area is changed and/or a more intense or less intense change may be achieved) of the magnetically actuatable material 19A, 19B. Hence, with the user borne 100 device both a digital tracing (via magnetometers 230) and a physical tracing (via magnetically actuatable material 19A, 19B) of the user borne device 100 is possible. Particularly, due to the ferromagnetic material in the flexible tip 130, a brush or calligraphy effect can be achieved which is directly physically and digitally traceable.

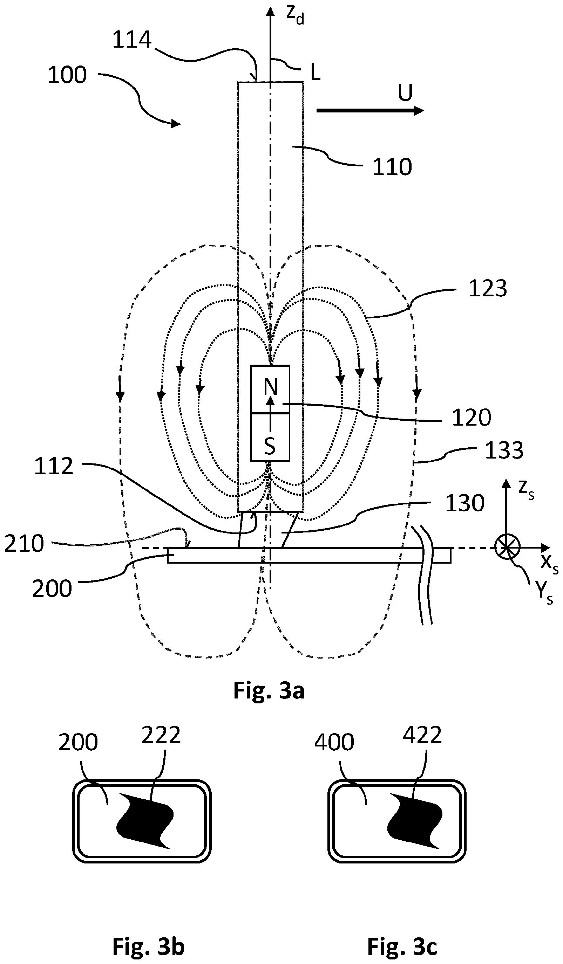

This principle is shown in **Figs. 2a, 2b, 2c** compared to **Figs. 3a, 3b, 3c**. **Fig. 2a** shows the user borne device 100 with its flexible tip 130 not or almost not being deformed or deflected. **Fig. 3a** shows the user borne device 100 when a user U operates it with more pressure on the interaction surface 210 than in **Fig. 2a****.** When comparing the figures, it can be seen that the flexible tip 130 in the operation of **Fig. 3a** is (more) deformed and deflected compared to **Fig. 2A****.** Hence, the flexible tip 130 may comprise a deformable or deflectable material (for instance, the above mentioned silicone material or brush material). The deformable or deflectable material is configured to allow a deformation or deflection of the flexible tip 130 when an external force is applied on the flexible tip 130 by the user U. For instance, when an external force is applied on the flexible tip 130 by the user U guiding the user borne device 100 is the interaction surface 210, the deformable or deflectable material is configured to allow a deformation or deflection of the flexible tip 130. In other words, the "flexible tip being deformable or deflectable" may also be expressed as "a form of the flexible tip" can be altered, particularly altered reversibly or elastically. Generally, "deformable or deflectable" may be understood as "deformable and/or deflectable". In embodiments, "deformable or deflectable" may include compressible and/or flexible laterally to the longitudinal axis L. In other words, when the user borne device 100 is guided on the interaction surface 210, a surface contact (particularly a contact area) between the flexible tip 130 and the interaction surface 210 is adjustable due to the flexible properties of the flexible tip 130. Depending on the force by which a user U guides the user borne device 100 with the flexible tip 130 over the interaction surface 210, the surface contact may be adjusted. Furthermore, an angle of the longitudinal axis L with respect to the interaction surface 210 and/or the movement trajectory may influence or adjust the surface contact similar as with a brush.

Due to the flexible tip 130 comprising ferromagnetic material, such a deformation (or deflection) of the flexible tip 130 is configured to modify the magnetic signature 123, 133 of the user borne device 100 as shown in **Fig. 3a** in comparison to **Fig. 2a****.** Both the magnetically actuatable display 220 and the plurality of magnetometers 230 can detect the modified magnetic signature 123, 133. In that regard, **Figs. 2b** **and** **3b** show the resulting physical trace 222 visualized on the magnetically actuatable display 220 and **Figs. 2c** **and** **3c** show the resulting digital trace 222 visualized on the output device 400. In this example, the deformation and deflection of the flexible tip 130 leads to a thicker trace.

Generally, the resulting trace depends on a characteristic represented by the magnetic signature 123, 133 of the user borne device 100. The characteristic of the user borne device 100 comprises at least one of a trace thickness and/or a trace opacity. The characteristic is adjustable by changing the magnetic signature 123, 133 which is changeable by adjusting the distance between the flexible tip 130 and the magnetic object 120 and/or by deforming/deflecting the flexible tip 130.

For instance, the trace effects may depend on the configuration of the flexible tip 130 and the magnetic object 120 (e.g. amount and/or density of ferromagnetic material in the flexible tip 130, sizes of flexible tip 130 and magnetic object 130, and/or magnetic properties (e.g. magnetic moments) of flexible tip 130 and magnetic object 130). Thereby, for instance, a brush effect by deforming the flexible tip 130 which comprises the ferromagnetic material may be provided, both digitally via the plurality of magnetometers 230 and physically by changing the visual state of the magnetically actuatable display 220 based on the characteristic.

The trace effects may be further adjustable by deforming the flexible tip 130 (as mentioned above) such that the surface contact of the flexible tip 130 with the interaction surface 210 increases, the trace thickness and/or trace opacity may increase.

Furthermore, the trace effects may be adjustable by adjusting the distance between the flexible tip 130 and the magnetic object 120. In that regard, the magnetic object 120 may be movably coupled to the elongate body 110. Particularly, the magnetic object 120 may be movably coupled to the elongate body 110 such that the magnetic object 120 is movable with respect to the flexible tip 130. The relative position of the magnetic object 120 and the flexible tip 130 influences the magnetic signature 123, 133 of the user borne device 100. Different relative positions result in different magnetic signatures 123, 133, and thus, in different physical traces 222 and digital traces 422. In other words, a movement of the magnetic object 120 relative to the flexible tip 130 is configured to modify a magnetic signature 123, 133 of the user borne device 100. Particularly, the flexible tip 130 may be fixed to the proximal end 112. Particularly, the magnetic object 120 may be configured to move translationally with respect to the proximal end 112 and/or to move rotationally with respect to the longitudinal axis L of the user borne device 100. Specifically, the magnetic object 120 may be configured to move translationally with respect to the proximal end 112 and along the longitudinal axis L. In embodiments, the user borne device 100 may comprise a mechanism coupled to the magnetic object 120. The mechanism may be configured to translationally and/or rotationally move the magnetic object 120 with respect to the proximal end 112.

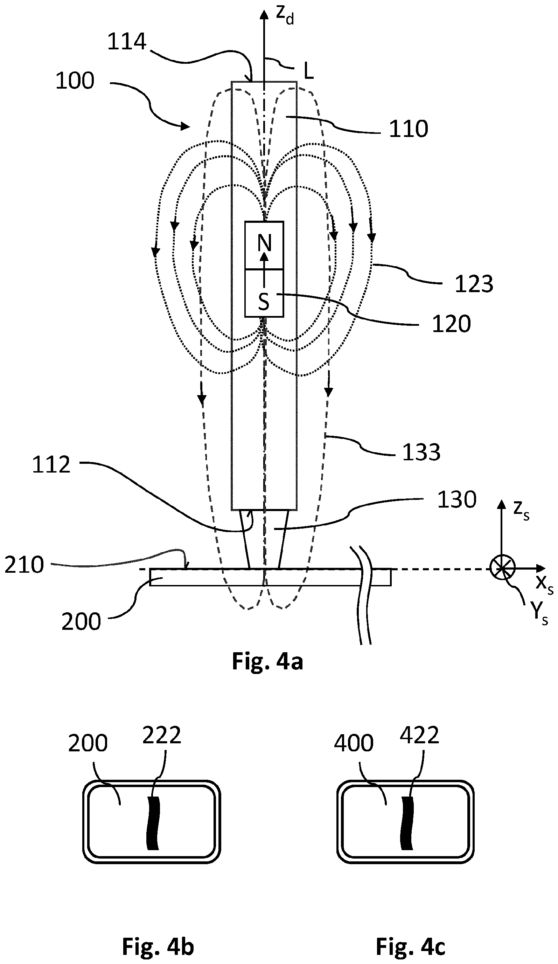

**Figs. 4a, 4b, and 4c** exemplary show the user borne device 100 operated on the interaction surface 210 with the magnetic object 120 being moved further away from the flexible tip compared to **Figs. 2a, 2b, 2c**. In other words, the distance between the flexible tip 130 and the magnetic object 120 is adjusted, particularly, increased. Thereby, the magnetic signature 123, 133 resulting from the combination of the flexible tip 130 and the magnetic object 120 is modified. This can be schematically seen by comparing the magnetic signature 123, 133 of Fig. 2a with the magnetic signature 123, 133 of **Fig. 4a****.** Both the magnetically actuatable display 220 and the plurality of magnetometers 230 can detect the modified magnetic signature 123, 133. In that regard, **Figs. 2b** **and** **3b** show the resulting physical trace 222 visualized on the magnetically actuatable display 220 and **Figs. 2c** **and** **3c** show the resulting digital trace 222 visualized on the output device 400. In this example, the larger distance between the flexible tip 130 and the magnetic object 120 leads to a thinner trace.

As mentioned above, in some embodiments an adjusted distance between the flexible tip 130 and the magnetic object 120 may additionally or alternatively to the trace thickness adjust the trace opacity. For instance, by reducing the distance between the flexible tip 210 and the magnetic object 120, first the opacity may be increased within a first range of distance, and subsequently the trace thickness may be increased within a second range of distance between the flexible tip 210 and the magnetic object 120. The second range may be a distance range closer to the flexible tip 120 than the first range. The first range and the second range may overlap. In some embodiments the second range may be within the first range.

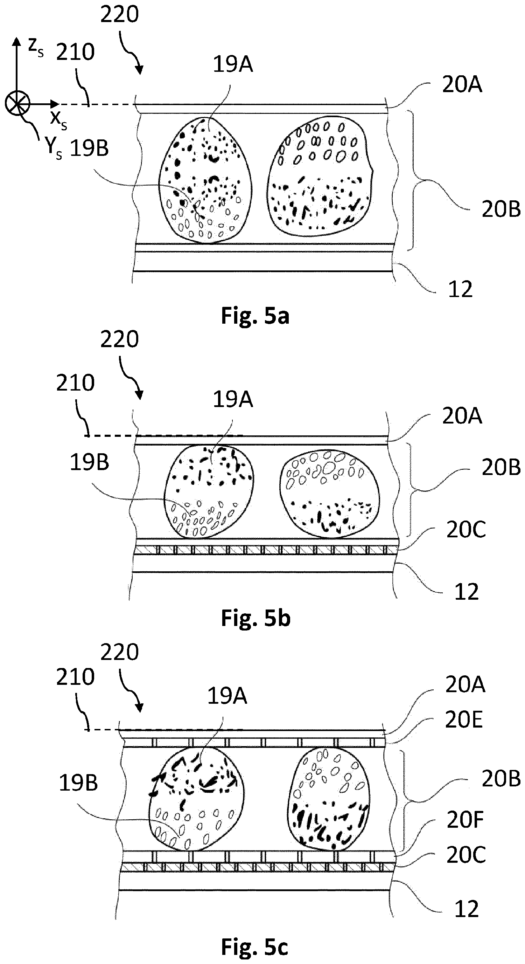

Exemplary, magnetically actuatable displays are shown in **Figs. 5a, 5b, 5c**.

**Fig. 5a** schematically illustrates a side cut through view of a magnetically actuatable display 220. A substrate 12 supports an interactive display layer 20B encapsulated by a lamination comprising a first electrode array 20A. In an embodiment, a second electrode array 20C may be provided, attached to the substrate 12 by a lamination layer (not shown). The interactive display layer 20B comprises a magnetically actuatable material 19A, 19B. Specifically, the interactive display layer 20B may face a user U. In embodiments, the magnetically actuatable material 19A, 19B may also be actuated by an electronic field emitted from the first 20A and/or second 20B electrode arrays. In embodiments, the first 20A and/or 20 second 20B electrode arrays are disposed on the substrate 12 in an individually addressable pixel pattern. In this case, the first 20A and/or second 20B electrode arrays form respective first and second pixel arrays (not shown). However, the first 20A and/or second 20B electrode arrays can be arbitrarily shaped regions, or the entire region, of the interactive display layer 20 The first electrode array 20A comprises, for example, a transparent conductor such as Indium Tin Oxide (ITO). In embodiments, the magnetically actuatable material 19A, 19B comprised in the interactive display array 20B comprises microcapsules (enclosing both magnetically actuatable materials 19A, 19B). Each microcapsule may comprise two types of electromagnetophoretic pigmentation, and a solvent, and in examples, a polymeric binder. The microcapsules may be freely encapsulated in the interactive display array 20B, or confined by micro-cells in, for example, a honeycomb or square pattern (not shown). The electromagnetophoretic pigmentation can be displaced within the microcapsule by a magnetic field and/or an electric field. In the illustrated embodiment, the first electromagnetophoretic pigment 19A has a darker, more saturated contrast level than the second electromagnetophoretic pigment 19B. In embodiments, when the first electromagnetophoretic pigment 19A dominates towards the front of the magnetically actuatable display 220 (in other words, when a predominant amount of first electromagnetophoretic pigment 19A in each microcapsule is closer to the first electrode array 20A than the second electromagnetophoretic pigment 19B, that portion of the magnetically actuatable display 220 will be in a first visual state. In an example, the first visual state may be a dark grey or a black colour. In embodiments, when the second electromagnetophoretic pigment 19B dominates towards the front of the magnetically actuatable display 220 (in other words, when a predominant amount of second electromagnetophoretic pigment 19B in each microcapsule is closer to the first electrode array 20A than the first electromagnetophoretic pigment 19B, that portion of the magnetically actuatable display 220 will be in a second visual state. In an example, the second visual state may be a light grey or white colour, for example.

**Fig. 5a** illustrates the microcapsule on the left-hand side in the first visual state, and the microcapsule on the right-hand side in the second visual state. To change the portion of the magnetically actuatable display 220 from first visual state to the second visual state is typically performed by a magnetic stimulus, for example from the magnetic object 120 and/or the flexible tip 130 of the user borne device 100. More specifically, the configuration of the second visual state depends on a characteristic represented by the magnetic signature 123, 133 of the user borne device 100 (i.e. the magnetic signature 123, 133 defined by the combination of the flexible tip 130 and the magnetic object 120).

**Fig. 5b** schematically illustrates a magnetically actuatable display 220 which may be further electrically actuatable (in this example the magnetically actuatable display 220 may also be referred to as a "magnetically and electrically actuatable display 220"). The second electrode array 20C may comprise, for example, an active thin film transistor matrix. The second electrode array 20C may be divided into a large number of pixels distributed on the surface of the electronic interactive display. For example, pixels comprised in the second electrode array 20C may be formed by an array of thin film transistors that allow the pixel electrodes of the second electrode array 20C to be addressed using a row-column addressing scheme, in one example. In another example, the second electrode array 20C may be unitarily addressed to enable each portion of the entire screen of the magnetically and electrically actuatable display 220 to be biased by the same amount. In another example, selected portions of the second electrode array can be provided such that, for example, a portion of the screen of the electronic interactive device intended to display a menu feature can be biased separately to the rest of the screen. In an example, for a given spatial position (e.g., first interaction surface axis xₛ and second interaction surface axis yₛ) on the screen (e.g. interaction surface 210) of the magnetically and electrically actuatable display 220, a pixel or region of the first electrode array 20A may apply a positive and/or negative electric field bias to a corresponding microcapsule or microcapsules of the underlying spatial position (xₛ, yₛ) of the interactive display array 20B, with the corresponding pixel or region of the second electrode array 20B held at 0 Volts, as an example. This may cause the first electromagnetophoretic pigment 19A in each microcapsule to be attracted to be closer to the first electrode array 20A than the second electromagnetophoretic pigment 19B. In this case, that portion of the magnetically and electrically actuatable display 220 will be in a third visual state. In an example, for a given spatial position (xₛ, yₛ) on the screen of the magnetically and electrically actuatable display 220 a pixel or region of the first electrode array 20A may apply a different positive and/or negative electric field bias to a corresponding microcapsule or microcapsules of the underlying spatial position (xₛ, yₛ) of the interactive display array 20B, with the corresponding pixel or region of the second electrode array 20B held at a different voltage level. This may cause the first electromagnetophoretic pigment 19A in each microcapsule to be repelled to be closer to the second electrode array 20B than the second electromagnetophoretic pigment 19B. In this case, that portion of the magnetically and electrically actuatable display 220 will be in a fourth visual state. In an example, the third visual state may be a saturated black colour, for example. In an example, the fourth visual state may be a saturated white colour, for example. In general, a magnetic stimulus typically moves the electromagnetophoretic pigments 19A, 19B with relatively lower efficiency as compared to an electric stimulus. Hence, a full range of pigment saturation (between third and fourth visual states) is obtained with the combination of magnetic and electric stimulation of the electromagnetophoretic pigments 19A, 19B. However, an acceptable range of pigment saturation (between first and second visual states) is obtained with the use of magnetic stimulation of the electromagnetophoretic pigments 19A, 19B.

**Fig. 5c** schematically illustrates a magnetically actuatable display 220 which may be further electrically actuatable (in this example the magnetically actuatable display 220 may also be referred to as a "magnetically and electrically actuatable display 220") comprising a touch position digitization means. In an example, the touch position digitisation means may comprise one, or more of a capacitive touch sensing layer 20E, a force sensing resistor layer 20F, or an infrared (IR) touch layer. If provided, a capacitive touch sensing layer 20E may work according to a mutual capacitance principle, and/or a self-capacitance principle. The capacitive touch sensing 20E can, in examples, be disposed in pixels that correspond, or are spatially registered, to the first and second electrode arrays 20A, 20B. The touch position digitisation means enables the localisation in the (xₛ, yₛ) plane of the touch of a proximal or distal end of a user borne device 100, or finger of a user U. Such touch information can be combined with location information of the user borne device 100 obtained using the plurality of magnetometers 230, for example, to improve overall accuracy and/or to localize in time the instant that the user borne device 100 touches the interactive display layer 20B, or an overlying electrode 20A or 20E, of the electronic interactive display 200.

In embodiments, the magnetic object 120 of the user borne device 100 is a permanent magnet. The magnetic object 120 defines a magnetic moment vector associated with a magnetic field 123 of magnetic object 120. The ferromagnetic material in the flexible tip 130 may focus the magnetic field 123 (specifically, the magnetic field lines) of the magnetic object 120 to create a focus magnetic field 133 which together with the magnetic field 123 defines the magnetic signature 123, 133. Particularly, the magnetic moment vector may be aligned with the longitudinal axis L of the elongate body 110. A magnetization orientation of the magnetic object 120 may be substantially aligned along, or parallel to, the longitudinal axis L of the user borne device 100. The magnetic object 120 may have a magnetic moment in a range between 0.1 Am2 to 10 Am2. For instance, the magnetic object 120 may have a magnetic moment in one of the following ranges: less than 0.1 Am2, or between 0.1 - 0.3 Am2, 0.3 - 0.6 Am2, 0.6 - 0.9 Am2, 0.9 - 1.2 Am2, 1.2 - 1.5 Am2, 1.5 - 1.8 Am2, 1.8 - 2.1 Am2, 2.1 - 2.4 Am2, 2.4 - 2.7 Am2, 2.7 - 3.0 Am2, 3.0 - 3.3 Am2, 3.3 - 3.6 Am2, 3.6 - 3.9 Am2, 3.9 - 4.2 Am2, 4.2 - 4.5 Am2, 4.5 - 4.8 Am2, 4.8 - 5.1 Am2, 5.1 - 5.4 Am2, 5.4 - 5.7 Am2, 5.7 - 6.0 Am2, 6.0 - 6.3 Am2, 6.3 - 6.6 Am2, 6.6 - 6.9 Am2, 6.9 - 7.2 Am2, 7.2 - 7.5 Am2, 7.5 - 7.8 Am2, 7.8 - 8.1 Am2, 8.1 - 8.4 Am2, 8.4 - 8.7 Am2, 8.7 - 9.0 Am2, 9.0 - 9.3 Am2, 9.3 - 9.6 Am2, 9.6 - 9.9 Am2. The ferromagnetic material of the flexible tip 130 may have a magnetic moment lower than the magnetic moment of the magnetic object 120. Specifically, the ferromagnetic material may have a magnetic moment in a range between 0.001 - 0.1 Am2. In some examples, the ferromagnetic material has a magnetic moment in one of the following ranges: 0.001 - 0.002 Am2, 0.002 - 0.003 Am2, 0.003 - 0.004 Am2, 0.0035 - 0.0045 Am2, 0.003 - 0.005 Am2, 0.005 - 0.006 Am2, 0.006 - 0.007 Am2, 0.007 - 0.008 Am2, 0.008 - 0.009 Am2, or 0.009 - 0.01 Am2, 0.01 - 0.02 Am2, 0.02-0.03 Am2, 0.03-0.04 Am2, 0.04-0.05 Am2, 0.05-0.06 Am2, 0.06-0.07 Am2, 0.07-0.08 Am2, 0.08-0.09 Am2, or 0.1 Am2. In some examples, the magnetic moment of the ferromagnetic material may be even 0.0001 Am2, less than 0.0001 Am2 or between 0.0001 and 0.001 Am2. As an example, the ferromagnetic material of the flexible tip 130 may have a magnetic moment of 0.004 Am2, while the magnetic object 120 may have a magnetic moment of 0.18 Am2.

The user-borne device 100 may be electrically and/or electronically passive. More specifically, electrically passive means that the user-borne device 100 may not comprise a power source (e.g., batteries) and/or means to receive power (e.g., wireless power transmission via an inductive coil) for powering a feature (e.g., an electronic feature) of the user-borne device 100. Electronically passive means that no computation or processing occurs (or happens) on the user-borne device 100. Thereby, the user-borne device 100 can be easily recycled causing less impact on the environment.

Although the present invention has been described above and is defined in the attached claims, it should be understood that the invention may alternatively be defined in accordance with the following embodiments:
1. A user borne device (100) for use with an electronic interactive display (200), the electronic interactive display (200) comprising a magnetically actuatable material (19A, 19B) and a plurality of magnetometers (230), wherein the user borne device (100) comprises:
   - an elongate body (110) defining a longitudinal axis (L) of the user borne device (100), wherein the elongate body (110) comprises a proximal end (112) and a distal end (114);
   - a magnetic object (120) arranged between the proximal end (112) and the distal end (114), wherein the magnetic object (120) is configured to create a magnetic field (123); and
   - a flexible tip (130) arranged at the proximal end (112) and extending away from the proximal end (112) outside the elongate body (110), wherein the flexible tip (130) comprises ferromagnetic material.
2. The user borne device (100) of embodiment 1, wherein the flexible tip (130) comprises a deformable material such that the flexible tip (130) is deformable when an external force is applied on the flexible tip (130) when the user borne device (100) is guided on an interaction surface (210) by a user (U).
3. The user borne device (100) of any one of the preceding embodiments, wherein the flexible tip (130) is configured as a silicone tip or a brush tip.
4. The user borne device (100) of any one of the preceding embodiments, wherein the flexible tip (130) comprises at least one of ferromagnetic wire, ferromagnetic powder and/or plasto ferrite.
5. The user borne device (100) of any one of the preceding embodiments, wherein the flexible tip (130) comprises ferromagnetic wire which is arranged at least partially on edges of the flexible tip (130).
6. The user borne device (100) of any one of the preceding embodiments, wherein the flexible tip (130) comprises ferromagnetic wire which at least partially extends along and/or parallel to the longitudinal axis (L).
7. The user borne device (100) of any one of the preceding embodiments, wherein the magnetic object (120) is movably coupled to the elongate body (110).
8. The user borne device (100) of any one of the preceding embodiments, wherein movement of the magnetic object (120) relative to the flexible tip (130) is configured to modify a magnetic signature (123, 133) of the user borne device (100).
9. The user borne device (100) of any one of the preceding embodiments, wherein a deformation of the flexible tip (130) is configured to modify a magnetic signature (123, 133) of the user borne device (100).
10. The user borne device (100) of any one of the preceding embodiments, wherein a magnetic signature (123, 133) of the user borne device (100) is configured to change an appearance of the magnetically actuatable material (19A, 19B) from a first state to a second state, in use with the electronic interactive display (200).
11. The user borne device (100) of any one of the preceding embodiments, wherein a magnetic signature (123, 133) of the user borne device (100) is configured to be detectable by the plurality of magnetometers (230), in use with the electronic interactive display (200).
12. The user borne device (100) of any one of the preceding embodiments, wherein the magnetic object (120) is configured to move translationally with respect to the proximal end (112) and/or to move rotationally with respect to the longitudinal axis (L) of the user borne device (100).
13. The user borne device (100) of any one of the preceding embodiments, further comprising a mechanism coupled to the magnetic object (120) and configured to translationally and/or rotationally move the magnetic object (120) with respect to the proximal end (112).
14. The user borne device (100) of any one of the preceding embodiments, wherein the magnetic object (120) is a permanent magnet.
15. The user borne device (100) of any one of the preceding embodiments, wherein the magnetic object (120) has a magnetic moment in one of the following ranges: less than 0.1 Am2, or between 0.1 - 0.3 Am2, 0.3 - 0.6 Am2, 0.6 - 0.9 Am2, 0.9 - 1.2 Am2, 1.2 - 1.5 Am2, 1.5 - 1.8 Am2, 1.8 - 2.1 Am2, 2.1 - 2.4 Am2, 2.4 - 2.7 Am2, 2.7 - 3.0 Am2, 3.0 - 3.3 Am2, 3.3 - 3.6 Am2, 3.6 - 3.9 Am2, 3.9 - 4.2 Am2, 4.2 - 4.5 Am2, 4.5 - 4.8 Am2, 4.8 - 5.1 Am2, 5.1 - 5.4 Am2, 5.4 - 5.7 Am2, 5.7 - 6.0 Am2, 6.0 - 6.3 Am2, 6.3 - 6.6 Am2, 6.6 - 6.9 Am2, 6.9 - 7.2 Am2, 7.2 - 7.5 Am2, 7.5 - 7.8 Am2, 7.8 - 8.1 Am2, 8.1 - 8.4 Am2, 8.4 - 8.7 Am2, 8.7 - 9.0 Am2, 9.0 - 9.3 Am2, 9.3 - 9.6 Am2, 9.6 - 9.9 Am2.
16. The user borne device (100) of any one of the preceding embodiments, wherein the ferromagnetic material of the flexible tip (130) has a magnetic moment lower than a magnetic moment of the magnetic object (120).
17. The user borne device (100) of any one of the preceding embodiments, wherein a magnetization orientation of the magnetic object (120) is substantially aligned along, or parallel to, the longitudinal axis (L) of the user borne device (100).
18. The user borne device (100) of any one of the preceding embodiments, wherein the user borne device (100) is electrically and/or electronically passive.
19. The user borne device (100) of any one of the preceding embodiments, wherein the user borne device (100) is a writing, drawing and/or erasing instrument.
20. A system (10) comprising:
   an electronic interactive display (200) comprising a magnetically actuatable display (220) and a plurality of magnetometers (230), wherein the electronic interactive display (200) defines an interaction surface (210),
   a user borne device (100) according to any one of the preceding embodiments which is operable on the interaction surface (220),
   wherein the plurality of magnetometers (230) is configured to create a sensing volume and to measure a magnetic signature (123, 133) created by the user borne device (100), and
   wherein a portion of the magnetically actuatable display (220) is configurable from least a first visual state into a second visual state based on a magnetic stimulus of the magnetic signature (123, 133).
21. The system (10) of embodiment 20, wherein the configuration of the second visual state depends on a characteristic represented by the magnetic signature (123, 133) of the user borne device (100).
22. The system (10) of any one of embodiments 20 or 21, wherein the system (10) comprises or is connectable to a processing unit (300) which is configured to track a movement of the magnetic object (120) in at least five degrees of freedom, more specifically wherein the processing unit (300) is configured to identify a characteristic represented by the magnetic signature (123, 133) of the user borne device (100).
23. The system (10) of any one of embodiments 21 or 22, wherein the characteristic of the user borne device (100) comprises at least one of a trace thickness and/or a trace opacity.
24. The system (10) of any one of embodiments 20 to 23, further comprising an output device (400), wherein the output device (400) is configured to visually reproduce the user borne device (100) as a virtual object, more specifically wherein the system (10) is configured to reproduce a movement of the user borne device (100) as a digital trace (422) on the output device (400).
25. The system (10) of any one of embodiments 20 to 24, wherein the magnetically actuatable display (220) comprises an interactive display layer (20B) which includes a magnetically actuatable material (19A, 19B).
26. The system (10) of any one of embodiments 20 to 25, wherein the magnetically actuatable display (220) faces a user (U).

## Claims

1. A user borne device (100) for use with an electronic interactive display (200), the electronic interactive display (200) comprising a magnetically actuatable material (19A, 19B) and a plurality of magnetometers (230), wherein the user borne device (100) comprises:
- an elongate body (110) defining a longitudinal axis (L) of the user borne device (100), wherein the elongate body (110) comprises a proximal end (112) and a distal end (114);
- a magnetic object (120) arranged between the proximal end (112) and the distal end (114), wherein the magnetic object (120) is configured to create a magnetic field (123); and
- a flexible tip (130) arranged at the proximal end (112) and extending away from the proximal end (112) outside the elongate body (110), wherein the flexible tip (130) comprises ferromagnetic material.

2. The user borne device (100) of claim 1, wherein the flexible tip (130) comprises a deformable material such that the flexible tip (130) is deformable when an external force is applied on the flexible tip (130) when the user borne device (100) is guided on an interaction surface (210) by a user (U).

3. The user borne device (100) of any one of the preceding claims, wherein the flexible tip (130) comprises at least one of ferromagnetic wire, ferromagnetic powder and/or plasto ferrite.

4. The user borne device (100) of any one of the preceding claims, wherein the flexible tip (130) comprises ferromagnetic wire which at least partially extends along and/or parallel to the longitudinal axis (L).

5. The user borne device (100) of any one of the preceding claims, wherein the magnetic object (120) is movably coupled to the elongate body (110).

6. The user borne device (100) of any one of the preceding claims, wherein a deformation of the flexible tip (130) is configured to modify a magnetic signature (123, 133) of the user borne device (100).

7. The user borne device (100) of any one of the preceding claims, wherein the magnetic object (120) is configured to move translationally with respect to the proximal end (112) and/or to move rotationally with respect to the longitudinal axis (L) of the user borne device (100).

8. The user borne device (100) of any one of the preceding claims, further comprising a mechanism coupled to the magnetic object (120) and configured to translationally and/or rotationally move the magnetic object (120) with respect to the proximal end (112).

9. The user borne device (100) of any one of the preceding claims, wherein a magnetization orientation of the magnetic object (120) is substantially aligned along, or parallel to, the longitudinal axis (L) of the user borne device (100).

10. A system (10) comprising:
an electronic interactive display (200) comprising a magnetically actuatable display (220) and a plurality of magnetometers (230), wherein the electronic interactive display (200) defines an interaction surface (210),
a user borne device (100) according to any one of the preceding claims which is operable on the interaction surface (220),
wherein the plurality of magnetometers (230) is configured to create a sensing volume and to measure a magnetic signature (123, 133) created by the user borne device (100), and
wherein a portion of the magnetically actuatable display (220) is configurable from least a first visual state into a second visual state based on a magnetic stimulus of the magnetic signature (123, 133).

11. The system (10) of claim 10, wherein the configuration of the second visual state depends on a characteristic represented by the magnetic signature (123, 133) of the user borne device (100).

12. The system (10) of any one of claims 10 or 11, wherein the system (10) comprises or is connectable to a processing unit (300) which is configured to track a movement of the magnetic object (120) in at least five degrees of freedom, more specifically wherein the processing unit (300) is configured to identify a characteristic represented by the magnetic signature (123, 133) of the user borne device (100).

13. The system (10) of any one of claims 11 or 12, wherein the characteristic of the user borne device (100) comprises at least one of a trace thickness and/or a trace opacity.

14. The system (10) of any one of claims 10 to 13, further comprising an output device (400), wherein the output device (400) is configured to visually reproduce the user borne device (100) as a virtual object, more specifically wherein the system (10) is configured to reproduce a movement of the user borne device (100) as a digital trace (422) on the output device (400).

15. The system (10) of any one of claims 10 to 14, wherein the magnetically actuatable display (220) comprises an interactive display layer (20B) which includes a magnetically actuatable material (19A, 19B).
